# EUROPÄISCHE PATENTSCHRIFT

(11) **EP 0 795 712 B1**
(45) Veröffentlichungstag und Bekanntmachung des Hinweises auf die Patenterteilung: **13.09.2000**
(21) Anmeldenummer: 97104022.5
(22) Anmeldetag: 11.03.1997
(51) Int. Cl.: F16L 41/08

(54) **Anschlussvorrichtung**
Connection device
Dispositif de raccordement

(30) Priorität: 13.03.1996 DE 29604662 U
(43) Veröffentlichungstag der Anmeldung: 17.09.1997
(73) Patentinhaber: PT-Poly-Tec GmbH Vertrieb und Herstellung von Dichtungssystemen, 63150 Heusenstamm (DE)
(72) Erfinder: Preisendörfer, Gerhard, 63150 Heusenstamm (DE)
(74) Vertreter: Blumbach, Kramer & Partner GbR

(56) Entgegenhaltungen:
- EP-A- 0 133 627
- DE-A- 2 351 499
- DE-A- 4 014 684
- DE-C- 3 212 142
- DE-U- 9 407 435

## Beschreibung

Die Erfindung bezieht sich auf eine Anschlußvorrichtung für eine Nebenrohrleitung in Kombination mit einer Rohrwand-Queröffnung, wie sie mit der durchbohrten Betonwand einer Hauptrohrleitung, eines Schachtes oder dergleichen angetroffen wird, mit den Merkmalen des Oberbegriffs des Anspruchs 1.

Es ist häufig notwendig, zwei Rohrleitungen unterschiedlichen Kalibers zusammenzuführen, für die es keine vorgefertigten Abzweigstücke gibt oder solche nicht angewendet werden können, weil die Hauptleitung bereits verlegt ist, während die Nebenrohrleitung nachträglich in die Hauptrohrleitung hineingeführt werden soll. In solchen Fällen wird die bestehende Einrichtung, die eine Hauptrohrleitung, ein Schacht oder dergleichen darstellen kann, angebohrt, um eine Öffnung zu schaffen, durch die die Nebenrohrleitung eingeführt wird.

Zur Abdichtung des Spaltes zwischen der Öffnung und der Nebenrohrleitung hat man bestehende Dichtungen verwendet, beispielsweise O-Ringdichtungen oder Rolldichtungen, deren Abmessung auf den abzudichtenden Spalt abgestimmt sind, beispielsweise ein Übermaß von 35 % aufweisen. Aus verschiedenen Gründen kommt es aber relativ häufig vor, daß an solchen Dichtungen Leckagen auftreten, die dann durch nachträgliche Maßnahmen, wie Injektion von Dichtungsmaterial, beseitigt werden müssen. Die Zuverlässigkeit einer derartig nachträglichen Abdichtung ist nicht sehr hoch.

Eine Anschlußvorrichtung der eingangs angegebenen Art ist aus DE 94 07 435 U bekannt. Hierbei wird eine elastische Hülle in die Betonwandöffnung eingesetzt und ein Anschlußstutzen, der mit einer Reihe von Außenringen und einem Stützrand versehen ist, wird in die elastische Hülle eingetrieben, um die elastische Hülle gegen die Öffnungswand zu klemmen und so die Öffnung abzudichten. Die Abdichtfunktion bei dieser Konstruktion hängt davon ab, daß die Queröffnung im Betonrohr relativ präzise hergestellt wird, da die Abdichtung von den Abmessungen der Queröffnung relativ zu der elastischen Hülle und dem Anschlußstutzen abhängt. Nachspannen der Dichtung ist nicht möglich.

Zum Abdichten einer Bauwerksöffnung, die als Queröffnung in einem Betonrohr ausgebildet sein kann, ist eine manschettenartige Ringraumdichtung aus elastomerem Material bekannt geworden (DE 40 14 684 A), die an einem ihrer axialen Enden in eine Dichtrandverstärkung ausläuft, um die Bauwerksöffnung von innen her zu umgreifen. Die manschettenartige Ringraumdichtung weist an ihrem Innenumfang Dichtrippen auf, die mit einer angesteckten Nebenrohrleitung abdichten. Auch hier muß die Bauwerksöffnung relativ präzise hergestellt werden, weil die Dichtwirkung von den relativen Abmessungen der beteiligten Teile abhängt.

Bei einer bekannten Einrichtung zur Verbindung von Rohren (DE-A 2 351 499) werden Rohre aus thermoplastischem Kunststoff oder faserverstärktem Kunstharz quer angebohrt und der Rand der Querbohrung mit einer Dichtungsmanschette umgeben. Die Dichtungsmanschette weist innen ein Schraubgewindeprofil auf zylindrischer Fläche auf. Ein Anschlußstutzen weist ein Muffenende zur Zusammenarbeit mit der Nebenrohrleitung und ein Eingriffsende zur Zusammenarbeit mit der Dichtungsmanschette auf. Das Eingriffsende besitzt Schraubgewindeprofil, dessen Gewindehöhe zum Ende des Stutzens, entfernt von der Muffe, abnimmt und auf einer Kegelstumpffläche liegt. Die Dichtungsmanschette ist wesentlich breiter als die Dicke der Rohrwand der Hauptrohrleitung, so daß sich die Hauptmasse der Dichtungsmanschette und damit auch der größte Teil des Schraubgewindeprofils außerhalb der Überdeckung mit der Rohrwandqueröffnung befindet. Die Dichtungsmanschette ist außerdem mit einer Nut oder wenigstens mit einem Flansch versehen und der Umfangsrand der Rohrwand-Queröffnung ist einschnappend in diese Nut einsetzbar und wird dort eingeklemmt, wenn der Anschlußstutzen in die Dichtungsmanschette geschraubt wird, bis die Dichtungsmanschette an einer Schulter des Anschlußstutzens abdichtet. Nachspannen der Dichtungsmanschette ist nicht vorgesehen.

Zur dichten Befestigung eines Rohres in der Öffnung einer Rohrhalteplatte ist es bekannt (EP-A-0 133 627) eine Hülse aus elastomerem Werkstoff vorzusehen, deren Innenumfang sich verjüngt, während der Außenumfang sich erweitert, um in der sich erweiternden Rohrwandqueröffnung klemmend anzulegen.

Der Erfindung liegt die Aufgabe zugrunde, eine Anschlußvorrichtung der eingangs angegebenen Art mit veränderbarer Kompression des Dichtungsteils auszubilden. Die Abdichtung des Anschlußstutzens soll nachgestellt werden können.
Die gestellte Aufgabe wird aufgrund der Maßnahmen der Ansprüche gelöst.

Im einzelnen ist ein hohlstopfenförmiger Elastomereinsatz als Dichtung vorgesehen, der einen an die Öffnung in der Hauptrohrleitung, des Schachtes oder dergleichen angepaßten Außenumfang und einen sich verjüngenden Innenumfang aufweist. Ferner ist ein Anschlußstutzen vorgesehen, der ein Eingriffsende zur Zusammenarbeit mit dem Innenumfang des Elastomereinsatzes und ein Muffenende zur Zusammenarbeit mit der Nebenrohrleitung aufweist. Durch die Zusammenarbeit von Elastomereinsatz und Anschlußstutzen erfolgt eine radiale Ausdehnung des Elastomereinsatzes durch Keilwirkung des Eingriffsendes des Anschlußstutzens. Dadurch wird einerseits der Elastomereinsatz in der Öffnung festgepreßt und abgedichtet sowie andererseits der Anschlußstutzen in dem Elastomereinsatz gehalten und ebenfalls abgedichtet. Die Kompression des Materials des Elastomereinsatzes kann durch das Maß des axialen Antriebs des Anschlußstutzens in den Elastomereinsatz bestimmt werden.

Um die Keilwirkung bequem einstellen zu können, weist der sich verjüngende Innenumfang des Elastomereinsatzes ein Innengewinde und das Eingriffsende des Anschlußstutzens ein Außengewinde auf, deren Ganghöhen gleich sind. Es kann sich um konusförmiges Innen- und Außengewinde handeln, oder nur das Innengewinde ist konusförmig, während das Außengewinde zylindrisch ist. In jedem Fall ist der Elastomereinsatz relativ weich und dehnbar, so daß die Gewindegänge um größere Beträge gegeneinander verschraubt werden können, als dies bei einer Konusgewindepaarung mit relativ festen Materialien der Fall ist.

Von besonderem Vorteil ist, daß nachträglich angebrachte Querbohrungen in der Hauptrohrleitung, dem Schacht oder dergleichen trotz ihrer mäßigen Herstellungsgüte gut abgedichtet werden können, weil sich das relativ weiche Material des Elastomereinsatzes in alle Unregelmäßigkeiten der hergestellten Öffnung hinein verformt. Wenn dies nicht im ersten Anlauf erfolgt sein sollte, kann man durch Nachstellen des Anschlußstutzens für eine erhöhte Anpressung sorgen, um komplette Abdichtung zu erzielen.

Die Erfindung wird anhand der Zeichnung beschrieben. Dabei zeigt:
- Fig. 1: einen Längsschnitt durch einen Elastomereinsatz und eine benachbarte Rohrwandung;
- Fig. 2: einen Längsschnitt durch einen Anschlußstutzen;
- Fig. 3: eine zusammengebaute Anschlußvorrichtung;
- Fig. 4: einen Längsschnitt durch eine zweite Ausführungsform des Elastomereinsatzes und
- Fig. 5: eine Seitenansicht eines Anschlußstutzens,
- Fig. 6: einen Längsschnitt durch eine dritte Ausführungsform des Elastomereinsatzes und
- Fig. 7: eine zusammengebaute Anschlußvorrichtung im Längsschnitt.

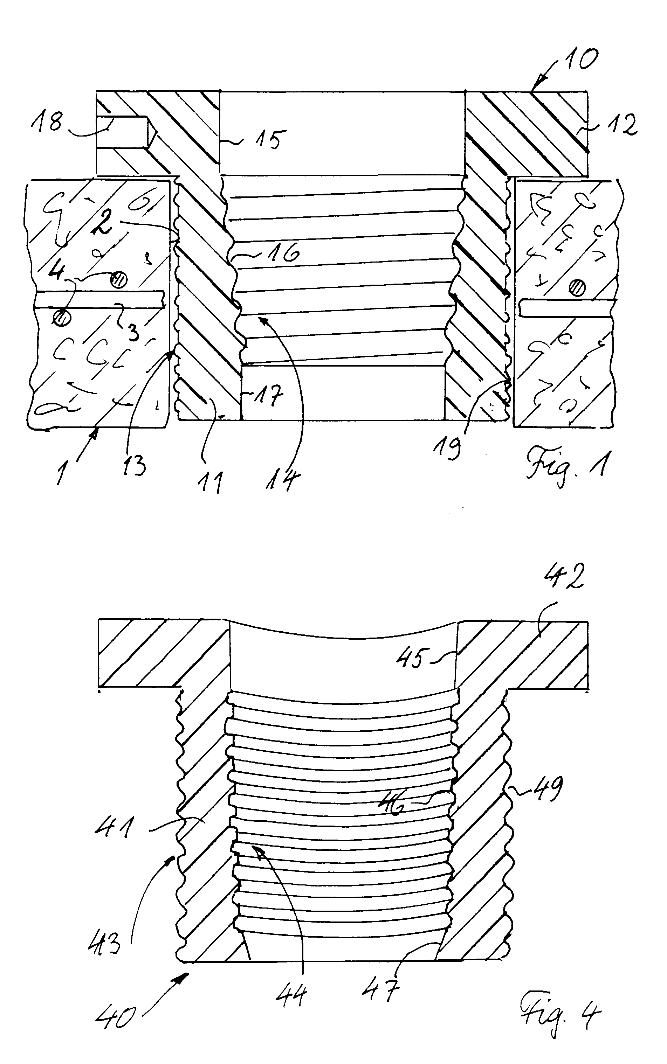

Fig. 1 zeigt einen Ausschnitt aus einer Hauptrohrleitung 1, die mit einer nachträglichen Querbohrung oder Öffnung 2 versehen ist. Bei der Hauptleitung soll es sich um Betonrohre handeln, die mit Längsbewehrung 3 und Querbewehrung 4 versehen sind. Es ist davon auszugehen, daß bei der Herstellung der Öffnung 2 die Längs- oder die Querbewehrung 4 durchschnitten werden, worunter die Regelmäßigkeit der Herstellung der Querbohrung bzw. -öffnung 2 leidet. Die gleichen Verhältnisse sind bei Schächten anzutreffen.

Ein hohlstopfenförmiger Elastomereinsatz 10 weist eine Kragenwand 11 und einen Flansch 12 auf. Der Außenumfang 13 der Kragenwand 11 ist dem Durchmesser der Öffnung 2 angepaßt. Der Innenumfang 14 weist einen äußeren Zentrierungsabschnitt 15, einen Gewindeabschnitt 16 und einen inneren Zentrierungsabschnitt 17 auf. Am Umfang des Flansches 12 können ein oder mehrere Arretierungslöcher 18 vorgesehen sein. Am Außenumfang 13 können Rillen 19 angebracht sein.

Wie aus Fig. 1 ersichtlich, verjüngt sich der Innenumfang 14 im Bereich des Gewindeabschnitts 16, der ein Konusinnengewinde darstellt. Bevorzugt wird ein Befestigungsgewinde mit abgerundetem Gewindeprofil. Der Konusöffnungswinkel, gerechnet zur Konusachse, liegt im Bereich von 5 bis 15°. Für weicheres Material und/oder unregelmäßige Bohrung 2 wird ein größerer Konuswinkel bevorzugt, sonst ein kleinerer. Das Gewinde 16 kann in einer härteren Materialschicht enthalten sein, die einstückig mit dem Material des Flansches 12 verbunden ist, während der Rest des Einsatzes 10 aus einem relativ weichen Elastomermaterial von etwa 40 Shore Härte besteht.

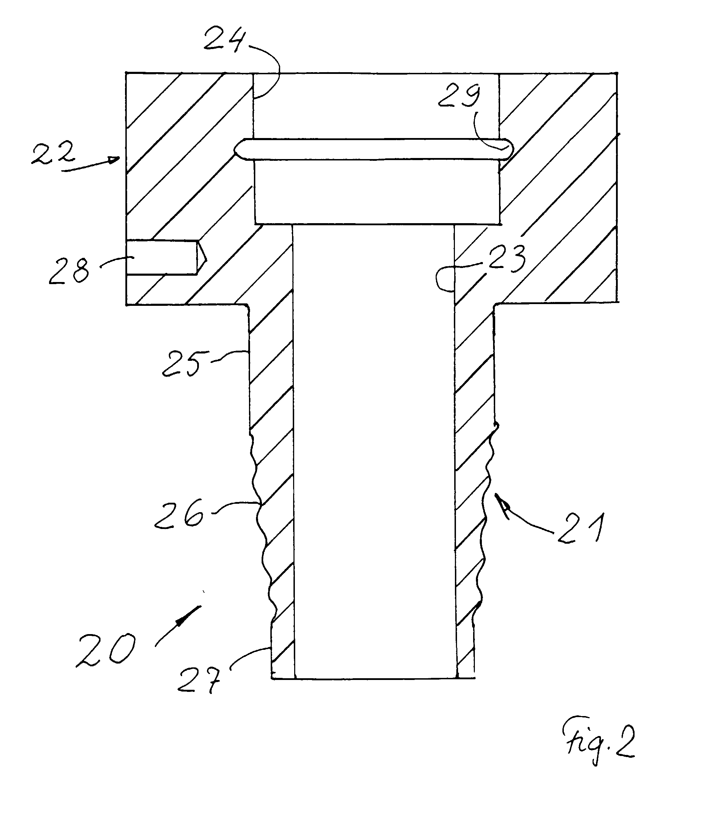

Fig. 2 zeigt einen Anschlußstutzen 20 aus einem festen Kunststoff oder Metall, der ein Eingriffsende 21 und ein Muffenende 22 aufweist. Das Innere des Anschlußstutzens 20 wird von einer Rohrbohrung 23 und einem Aufnahmeraum 24 zum Anschluß der Nebenrohrleitung bestimmt. Am Außenumfang sind ein äußerer, ringförmiger Zentrierbereich 25, ein Konusgewindebereich 26 und ein innerer, ringförmiger Zentrierbereich 27 vorgesehen. Ein oder mehrere querverlaufende Sacklöcher 28 am Muffenende 22 dienen zur Drehbetätigung. Der Aufnahmeraum 24 kann eine Nut 29 zur Aufnahme einer Dichtung aufweisen, beispielsweise eines O-Rings. Am Übergang zwischen dem Zentrierbereich 25 und dem Gewindebereich 26 können Preßdichtungs- bzw. Lippendichtungsausbildungen vorgesehen sein, um zusätzliche Abdichtungsmöglichkeiten des Spaltes zwischen dem Elastomereinsatz 10 und dem Anschlußstutzen 20 zu bieten.

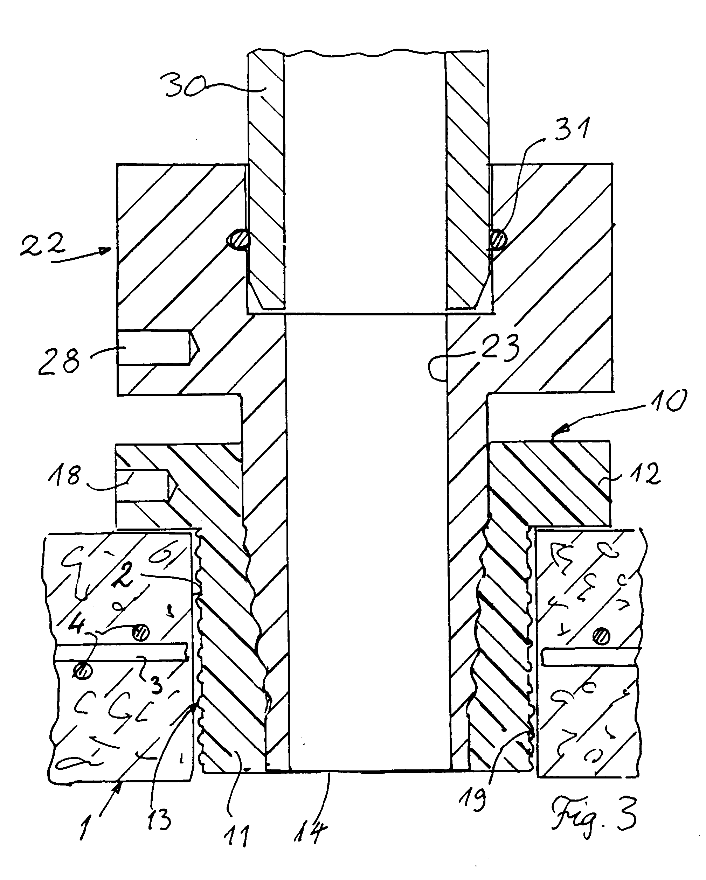

Fig. 3 zeigt die in der Öffnung 2 montierte Anschlußvorrichtung. Der Einsatz 10 ist bis zum Anschlag an den Flansch 12 in die Bohrung 2 des Betonrohrs 1 hineingeschoben, und der Anschlußstutzen 20 wird so weit wie möglich in den Einsatz 10 hineingesteckt und danach eine Verkeilung vorgenommen. Man kann dies durch Eintreiben des Anschlußstutzens 20 in den Einsatz 10 bewirken, bevorzugt wird jedoch die sanftere Methode des Einschraubens, indem eine Art Schraubschlüssel in ein Einschraubloch 28 eingreift und den Stutzen 20 dreht, wodurch das Gewinde 16, 26 den Einschraubstutzen weiter in die Öffnung 2 hineinzieht und der Elastomereinsatz 10 radial gedehnt wird, um sich immer mehr den Unregelmäßigkeiten der Öffnung 2 anzupassen. Das Material des Einsatzes 10 ist wesentlich weicher und dehnungsfähiger als das Material des Einschraubstutzens 20. Wenn eine Überprüfung auf Dichtigkeit ergeben hat, daß noch ein Leck vorliegt, kann durch Nachziehen des Anschlußstutzens 20 für eine höhere Kompression des Materials im Dichtungsbereich des Einsatzes 10 gesorgt werden.

Fig. 3 zeigt noch, wie ein Anschlußrohr 30 aus Kunststoff oder dergleichen mittels eines Dichtrings 31 im Muffenende 22 abdichtend angeschlossen ist. Das Anschlußrohr 30 stellt einen Teil der Nebenrohrleitung dar, während das Betonrohr 1 zu der Hauptrohrleitung gehört, in welche die Nebenrohrleitung einmündet oder von dieser abzweigt.

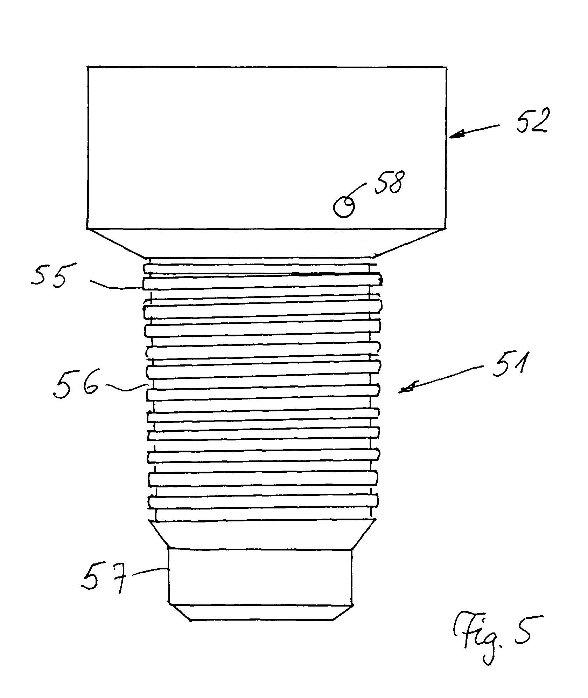

Fig. 4 zeigt eine weitere Ausführungsform 40 des Elastomereinsatzes. Gleichartige Teile zu Fig. 1 werden mit Bezugszeichen von gleicher Endziffer versehen. Es ist weitgehende Übereinstimmung mit der Ausführungsform 10 gegeben, und es werden nur die Unterschiede erläutert. Anstatt zylindrischer Zentrierbereiche werden konische Zentrierbereiche 45, 47 verwendet, und anstelle eines Rundgewindes wird Trapezgewinde 46 gezeigt. Demgemäß kann der zugehörige Anschlußstutzen nur durch Verschrauben aufgezogen werden.

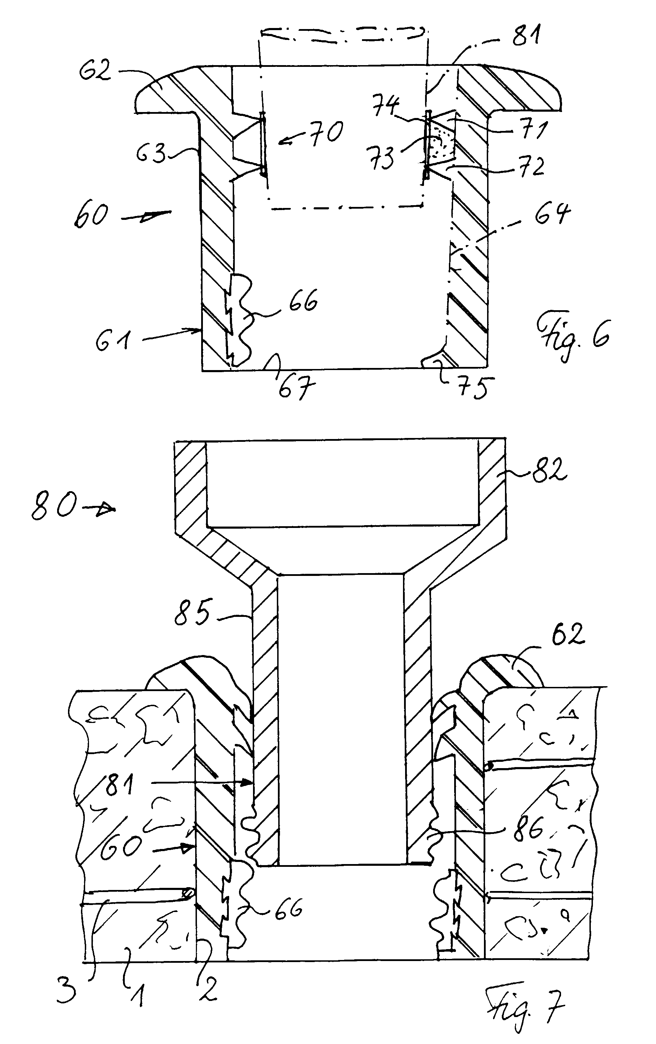

Fig. 5 zeigt einen zu Fig. 4 passenden Anschlußstutzen 50 von der Seite. Es werden zu den Endziffern der Fig. 2 korrespondierende Bezugszeichen verwendet. Es besteht weitgehende Übereinstimmung mit dem Anschlußstutzen 20 der Fig. 2 mit dem hauptsächlichsten Unterschied, daß sich der Gewindeabschnitt 56 nicht verjüngt und daß sich das Gewinde in den zylindrischen Zentrierabschnitt hineinzieht. Wegen des nachgiebigen, relativ weichen Materials von 40 Shore Härte des Elastomereinsatzes 40 läßt sich der Anschlußstutzen 50 in den Innenumfang des Einsatzes 40 hineindrehen, wobei die Wandung 41 gedehnt und radial nach außen verdrängt wird, soweit dies die Öffnung 2 zuläßt, in der der Einsatz 40 sitzt. Das vordere Ende des zylindrischen Gewindeabschnitts 56 schiebt gewissermaßen einen Verdrängungswulst aus Material des Elastomereinsatzes vor sich her.

Es versteht sich, daß das Maß der Verjüngung des Gewindeabschnitts 46 darauf abgestellt wird, wie weit sich das Elastomermaterial des Einsatzes 40 zusammenpressen oder verdrängen läßt. Es kommen Verjüngungswinkel im Bereich von 1,5 bis 10° in Betracht, wobei ein Verjüngungswinkel von etwa 3° bevorzugt wird.

Zwischen den Ausführungsformen der Fig. 1 bis 3 einerseits und Fig. 4, 5 andererseits gibt es Übergangsformen. Der Gewindebereich 56 wird abweichend von der zylindrischen Form leicht konisch gemacht, aber mit weniger Konizität als es der Verjüngung des Gewindebereichs 46 entspricht. Durch diese Maßnahme erfolgt eine etwas gleichmäßigere radiale Dehnung der Wandung 41 des Einsatzes 40 über die axiale Länge, während weiterhin ein Hauptverdrängungswulst in der Nähe des vorderen Endes des Gewindebereichs 56 gebildet wird, der für eine gute Abdichtung im Bereich vor der angeschnittenen Armierung 3, 4 der Öffnung 2 sorgt.

Der Innenumfang 14, 44 des Elastomereinsatzes kann auch leicht tonnenförmig gestaltet sein, um zusammen mit sich verjüngenden Zentrierbereichen 45, 47 einen Anlagestopp für den Anschlußstutzen zu bilden.

Das Einschrauben des Anschlußstutzens in den Elastomereinsatz wird durch Gleitmittel erleichtert. Man kann solches Gleitmittel bereits werkseitig aufbringen und durch eine abziehbare Deckfolie schützen.

Um zu einer besonders festen Einbindung des Elastomereinsatzes in der Öffnung 2 zu gelangen, kann man den Außenumfang des Einsatzes mit einem Reaktionskleber versehen, der, falls werkseitig angebracht, ebenfalls durch eine abziehbare Deckfolie geschützt wird. Von besonderem Vorteil ist, daß die angeschnittene Stahlarmierung 3, 4 sehr gut vor Korrosion geschützt wird, da Feuchtigkeit und Dämpfe nicht bis zu den Schnittstellen des Stahls gelangen können.

Wegen der Pressung des Elastomereinsatzes ist damit zu rechnen, daß die Gewindeabschnitte 16, 26 bzw. 46, 56 sich gegenseitig gut abdichten, d.h. daß keine Restlücke verbleibt. Falls gewünscht, kann zur weiteren Abdichtung des Spaltes zwischen Elastomereinsatz und Anschlußstutzen die Technik der Preßdichtung-Lippendichtung angewandt werden.

Fig. 6 und 7 zeigen eine solche Ausführungsform mit kombinierter Preß-Lippendichtung. Fig. 6 skizziert dabei den Elastomereinsatz, der das allgemeine Bezugszeichen 60 trägt, während die restlichen Teile Bezugszeichen mit korrespondierenden Endziffern entsprechend den vorherigen Ausführungsformen tragen. Der sich verjüngende Innenumfang wird mit einer strichpunktierten Linie 64 symbolisiert. Die Verengung des Innenumfangs kann praktisch dadurch erzielt werden, daß das Innengewinde 66 nahe der inneren Öffnung 67 vorgesehen ist, wodurch der Bereich nahe der Öffnung 67 gegenüber der Einführungsöffnung 65 verschmälert wird. Der Gewindeabschnitt 66 besteht beispielsweise aus PVC, während die Kragenwand 61 des Elastomereinsatzes aus einem weicheren Elastomer besteht, wie im Zusammenhang mit den zuvor beschriebenen Ausführungsformen erörtert.

Die Preß-Lippendichtung 70 enthält zwei in axialem Abstand voneinander angeordnete Ringwände 71, 72, die im Querschnitt dreieckförmig sind und deren Zwischenraum mit einem Gleitmittel 73 ausgefüllt ist. Eine abziehbare Deckfolie 74 verhindert die Austrocknung des Gleitmittels 73 während der Lagerung vor dem Einbau.

In Fig. 6 ist noch ein Höcker 75 gezeigt, der als Anlagestopp für einen Anschlußstutzen dienen kann, wenn dies erwünscht ist. Dadurch kann verhindert werden, daß der Anschlußstutzen in die lichte Weite des Hohlraums der Hauptrohrleitung hineinreicht.

Fig. 7 zeigt einen Anschlußstutzen 80 im Zusammenwirken mit dem Elastomereinsatz 60. Wie bei den Ausführungsbeispielen der Fig. 1 und 3 wird die Querbohrung 2 der Hauptrohrleitung 1 mit einem Reaktionskleber versehen, um gegebenenfalls angeschnittene Bewehrungen 3 sicher gegen Feuchtigkeit zu schützen. Solcher Reaktionskleber kann auch auf der Außenseite 63 des Einsatzes 60 aufgetragen und vor dem Einsatz durch Abdeckfolie geschützt sein.

Wenn der Anschlußstutzen 80 in den montierten Elastomereinsatz 60 eingetrieben wird, kommt der Gewindebereich 86 mit dem Gleitmittel 73 in Berührung und nimmt solches auf. Anschließend wird Gleitmittel am Außenumfang 86 des Stutzens 80 verteilt, und dadurch werden die Lippen 71, 72 geschmiert. Sobald die Schraubgänge 86 und 66 aufeinandertreffen, wird der Stutzen 80 gedreht, bis die Schulter der Muffe 82 am Flansch 62 anschlägt. Die radiale Ausdehnung des Einsatzes 60 erfolgt im Bereich der Preß-Lippendichtung 70 und im Bereich der Schraubgänge 66.

Die Anschlußvorrichtung kann auch so abgewandelt werden, daß der Anschlußstutzen mit einem sich verjüngenden Eingriffsende 81 (in Fig. 6 angedeutet) lediglich durch axiales Eintreiben in den Elastomereinsatz montiert wird. Dabei ist es auch möglich, die Anschlußvorrichtung in gestecktem Zustand zu liefern, d.h. mit dem vorderen Ende 81 auf der Abdeckung 74 der Preß-Lippendichtung 70. An der Baustelle wird dann der Elastomereinsatz von dem Anschlußstutzen getrennt, der Elastomereinsatz wird in die Querbohrung der Hauptrohrleitung montiert, wonach der Anschlußstutzen mit seinem sich nach vorne verjüngenden Eingriffsende 81 in den Elastomereinsatz eingetrieben wird.

## Patentansprüche

1. Anschlußvorrichtung für eine Nebenrohrleitung (30) in Kombination mit einer Rohrwand-Queröffnung (2), wie sie mit der durchbohrten Betonwand einer Hauptrohrleitung (1), eines Schachtes oder dergleichen angetroffen wird, mit folgenden Merkmalen:
ein hohlstopfenförmiger, relativ weicher Elastomereinsatz (10, 40, 60) weist einen Einsatzwandbereich (11, 41, 61) mit einem Innenumfang (14, 44, 64) und mit einer Außenfläche (13, 43, 63) auf, die insgesamt an die Rohrwand-Queröffnung (2) angepaßt ist;
ein relativ härterer Anschlußstutzen (20, 50, 80) weist ein Eingriffsende (21, 51, 81) mit Außenumfang zur Zusammenarbeit mit dem Innenumfang des Elastomereinsatzes und ein Muffenende (22, 52, 82) zur Zusammenarbeit mit der Nebenrohrleitung (30) auf;
der Innenumfang (14, 44, 64) des Elastomereinsatzes (10, 40, 60) ist wenigstens teilweise enger als der Außenumfang des Eingriffsendes (21, 51, 81) des Anschlußstutzens (20, 50, 80),
dadurch gekennzeichnet,
daß der Innenumfang (14, 44, 64) des Elastomereinsatzes (10, 40, 60) mehrere Windungen von Innengewinde (16, 46, 66) aufweist, das sich wenigstens teilweise in Einschraubrichtung verjüngt, wobei die Windungen sich weitgehend oder ausschließlich im Bereich der Überdeckung mit der Rohrwand-Queröffnung (2) befinden und
daß das Eingriffsende (21, 51, 81) des Anschlußstutzens (20, 50, 80) im Überdeckungsbereich der Rohrwand-Queröffnung (2) mit mehreren Windungen von Außengewinde (26, 56, 86) versehen ist, wobei das Innengewinde und das Außengewinde die gleiche Ganghöhe aufweisen und deren zunehmendes Ineinandergreifen durch Keilwirkung zur radialen Anpressung der Außenfläche (13, 43, 63) des Einsatz-Wandbereichs an der Rohrwand-Queröffnung (2) führt.

2. Anschlußvorrichtung nach Anspruch 1,
dadurch gekennzeichnet, daß das Innengewinde (16, 46) des Elastomereinsatzes (10, 40) ein Konusgewinde darstellt.

3. Anschlußvorrichtung nach Anspruch 2,
dadurch gekennzeichnet, daß der Bereich mit Außengewinde (26, 56) des Anschlagstutzens (20, 50) sich in Einschraubrichtung verjüngt, wobei der Verjüngungwinkel des Anschlußstutzens (20, 50) mit dem Verjüngungswinkel des Konusgewindes (16, 46) des Elastomereinsatzes (10, 40) übereinstimmt.

4. Anschlußvorrichtung nach Anspruch 2,
dadurch gekennzeichnet, daß das Eingriffsende (21, 51) des Anschlußstutzens (20, 50) keine oder nur eine schwächere Verjüngung als der Innenumfang (14, 44) des Elastomereinsatzes (10, 40) aufweist.

5. Anschlußvorrichtung nach einem der Ansprüche 1 bis 4,
dadurch gekennzeichnet, daß das Gewinde (16, 26; 46, 56, 66, 86) ein Befestigungsgewinde mit Rundprofil ist.

6. Anschlußvorrichtung nach einem der Ansprüche 1 bis 5,
dadurch gekennzeichnet, daß die Außenfläche (13, 43, 63) des Einsatzwandbereichs (11, 41, 61) des Elastomereinsatzes (10, 40,60) zylindrisch ist und daß ein Flansch (12,42,62) als Anschlag auf der Außenseite des Elastomereinsatzes vorgesehen ist.

7. Anschlußvorrichtung nach einem der Ansprüche 1 bis 6,
dadurch gekennzeichnet, daß der Anschlußstutzen (20,50) eine Drehbetätigungsausbildung (28, 58) aufweist.

8. Anschlußvorrichtung nach einem der Ansprüche 1 bis 7,
dadurch gekennzeichnet, daß der Elastomereinsatz (10, 40) am Außenumfang (13, 43) profiliert (19, 49) ist.

9. Anschlußvorrichtung nach einem der Ansprüche 1 bis 8,
dadurch gekennzeichnet, daß der Außenumfang (13, 43, 63) des Elastomereinsatzes (10, 40, 60) mit einer Klebstoffschicht versehen ist, die durch eine abziehbare Deckfolie geschützt ist.

10. Anschlußvorrichtung nach einem der Ansprüche 1 bis 9,
dadurch gekennzeichnet, daß der Elastomereinsatz (60) eine Preßlippendichtung (70) für die Nebenrohrleitung (30) im Einführungsbereich dieser Nebenrohrleitung in den Elastomereinsatz aufweist.

11. Anschlußvorrichtung nach Anspruch 10,
dadurch gekennzeichnet, daß die Preßlippendichtung (70) zwei im Abstand angeordnete Lippen (71,72) umfaßt, zwischen denen sich ein Gleitmittelvorrat (73) befindet.

## Claims

1. A connecting device for a secondary pipeline (30) in combination with a pipe wall transverse opening (2) of the kind found with the drilled concrete wall of a main pipeline (1), a shaft or the like, with the following features:
a relatively soft elastomer insert (10, 40, 60) in the form of a hollow plug has an insert wall zone (11, 41, 61) with an inner periphery (14, 44, 64) and with an outer surface (13, 43, 63), which is adapted overall to the pipe wall transverse opening (2);
a relatively harder connecting spigot (20, 50, 80) has an engagement end (21, 51, 81) with an outer periphery for co-operation with the inner periphery of the elastomer insert and a socket end (22, 52, 82) for co-operation with the secondary pipeline (30);
the inner periphery (14, 44, 64) of the elastomer insert (10, 40, 60) is at least partially narrower than the outer periphery of the engagement end (21, 51, 81) of the connecting spigot (20, 50, 80),
characterised in that
the inner periphery (14, 44, 64) of the elastomer insert (10, 40, 60) comprises a number of turns of internal screwthread (16, 46, 66), which tapers at least partly in the screwing-in direction, the turns being situated substantially or solely in the region of the overlap with the pipe wall transverse opening (2) and
in that the engagement end (21, 51, 81) of the connecting spigot (20, 50, 80) is provided with a number of turns of external screwthread (26, 56, 86) in the overlap zone of the pipe wall transverse opening (2), the internal screwthread and the external screwthread having the same pitch and their increasing inter-engagement by wedge action resulting in radial pressing of the outer surface (13, 43, 63) of the insert wall zone against the pipe wall transverse opening (2) .

2. A connecting device according to claim 1,
characterised in that the internal screwthread (16, 46) of the elastomer insert (10, 40) constitutes a conical screwthread.

3. A connecting device according to claim 2,
characterised in that the zone with the external screwthread (26, 56) of the connecting spigot (20, 50) tapers in the screwing-in direction, the taper angle of the connecting spigot (20, 50) coinciding with the taper angle of the conical screwthread (16, 46) of the elastomer insert (10, 40).

4. A connecting device according to claim 2,
characterised in that the engagement end (21, 51) of the connecting spigot (20, 50) has no taper or only a weaker taper than the inner periphery (14, 44) of the elastomer insert (10, 40).

5. A connecting device according to any one of claims 1 to 4, characterised in that the screwthread (16, 26; 46, 56, 66, 86) is a fixing screwthread with a circular profile.

6. A connecting device according to any one of claims 1 to 5, characterised in that the outer surface (13, 43, 63) of the insert wall zone (11, 41, 61) of the elastomer insert (10, 40, 60) is cylindrical and in that a flange (12, 42, 62) is provided as a stop on the outside of the elastomer insert.

7. A connecting device according to any one of claims 1 to 6, characterised in that the connecting spigot (20, 50) has a rotational actuation construction (28, 58).

8. A connecting device according to any one of claims 1 to 7, characterised in that the elastomer insert (10, 40) is profiled (19, 49) at the outer periphery (13, 43).

9. A connecting device according to any one of claims 1 to 8, characterised in that the outer periphery (13, 43, 63) of the elastomer insert (10, 40, 60) is provided with a coating of adhesive protected by a pull-off cover film.

10. A connecting device according to any one of claims 1 to 9, characterised in that the elastomer insert (60) has a compression lip seal (70) for the secondary pipeline (30) in the zone where said secondary pipeline is introduced into the elastomer insert.

11. A connecting device according to claim 10,
characterised in that the compression lip seal (70) comprises two spaced-apart lips (71, 72), between which there is a lubricant supply (73).

## Revendications

1. Dispositif de raccordement d'un conduit de tuyauterie secondaire (30) en combinaison avec une ouverture transversale (2) d'une paroi de tuyauterie, dispositif tel qu'on le rencontre dans le cas de la paroi percée en béton d'un conduit de tuyauterie principal (1), d'un puits, ou similaire, présentant les caractéristiques suivantes:
un insert élastomère (10, 40, 60) en forme de bouchon contre-percé, relativement souple, comporte une zone de paroi (11, 41, 61) de l'insert, ayant une périphérie intérieure (14, 44, 64) et une surface extérieure (13, 43, 63), qui sont globalement adaptées à l'ouverture transversale (2) de la paroi de la tuyauterie;
une tubulure raccord (20, 50, 80) relativement dure comporte une extrémité d'engagement (21, 51, 81) présentant une périphérie extérieure, destinée à coopérer avec la périphérie intérieure de l'insert élastomère, et une extrémité à manchon (22, 52, 82) destinée à coopérer avec le conduit de tuyauterie secondaire (30);
la périphérie intérieure (14, 44, 64) de l'insert élastomère (10, 40, 60) est au moins partiellement plus étroite que la périphérie extérieure de l'extrémité d'engagement (21, 51, 81) de la tubulure raccord (20, 50, 80),
caractérisé en ce que
la périphérie intérieure (14, 44, 64) de l'insert élastomère (10, 40, 60) comporte plusieurs spires d'un filetage intérieur (16, 46, 66) qui se resserre au moins partiellement dans le sens de l'introduction, les spires se trouvant, pour la plupart, voire exclusivement, au niveau de la zone de recouvrement avec l'ouverture transversale (2) de la paroi de la tuyauterie; et en ce que
l'extrémité d'engagement (21, 51, 81) de la tubulure raccord (20, 50, 80) est pourvue, dans la zone de recouvrement avec l'ouverture transversale (2) de la paroi de la tuyauterie, de plusieurs spires d'un filetage extérieur (26, 56, 86), le filetage intérieur et le filetage extérieur présentant le même pas, et leur engagement mutuel progressif conduisant, par effet de coin, à un serrage radial de la surface extérieure (13, 43, 63) de la zone de paroi de l'insert dans l'ouverture transversale (2) de la paroi de la tuyauterie.

2. Dispositif de raccordement selon la revendication 1, caractérisé en ce que le filetage intérieur (16, 46) de l'insert élastomère (10, 40) constitue un filetage conique.

3. Dispositif de raccordement selon la revendication 2, caractérisé en ce que la zone comportant le filetage extérieur (26, 56) de la tubulure raccord (20, 50) se resserre en forme de cône dans la direction du vissage, l'angle de cône de la tubulure raccord (20, 50) coïncidant avec l'angle de cône du filetage conique (16, 46) de l'insert élastomère (10, 40).

4. Dispositif de raccordement selon la revendication 2, caractérisé en ce que l'extrémité d'engagement (21, 51) de la tubulure raccord (20, 50) ne présente aucune conicité, ou une conicité moindre que celle de la périphérie intérieure (14, 44) de l'insert élastomère (10, 40).

5. Dispositif de raccordement selon l'une des revendications 1 à 4, caractérisé en ce que le filetage (16, 26; 46, 56, 66, 86) est un filetage de fixation à profil rond.

6. Dispositif de raccordement selon l'une des revendications 1 à 5, caractérisé en ce que la surface extérieure (13, 43, 63) de la zone de paroi (11, 41, 61) de l'insert élastomère (10, 40, 60) est cylindrique, et qu'une collerette (12, 42, 62) faisant office de butée est prévue du côté extérieur de l'insert élastomère.

7. Dispositif de raccordement selon l'une des revendications 1 à 6, caractérisé en ce que la tubulure raccord (20, 50) présente un dispositif (28, 58) d'actionnement en rotation.

8. Dispositif de raccordement selon l'une des revendications 1 à 7, caractérisé en ce que l'insert élastomère (10, 40) est profilé (19,49) sur sa périphérie extérieure (13, 43).

9. Dispositif de raccordement selon l'une des revendications 1 à 8, caractérisé en ce que la périphérie extérieure (13, 43, 63) de l'insert élastomère (10, 40, 60) est pourvue d'une couche de colle qui est protégée par une pellicule de couverture détachable.

10. Dispositif de raccordement selon l'une des revendications 1 à 9, caractérisé en ce que l'insert élastomère (60) comporte un joint à lèvres presse-étoupe (70) pour le conduit de tuyauterie secondaire (30), aménagé dans la zone d'introduction de ce conduit de tuyauterie secondaire dans l'insert élastomère.

11. Dispositif de raccordement selon la revendication 10, caractérisé en ce que le joint à lèvres presse-étoupe (70) comprend deux lèvres (71, 72) agencées à distance l'une de l'autre, entre lesquelles se trouve une réserve de produit de glissement (73).
